Europäisches Patentamt

(19) European Patent Office

Office européen des brevets

(11) Publication number: **0 130 881**
**B1**

(12) EUROPEAN PATENT SPECIFICATION

(45) Date of publication of patent specification: **01.03.89**  (51) Int. Cl.⁴: **G 21 C 19/30**

(21) Application number: **84401274.0**

(22) Date of filing: **20.06.84**

(54) Method and apparatus for providing a non-radioactive coolant for a nuclear reactor.

(30) Priority: **29.06.83 US 509027**

(43) Date of publication of application:
**09.01.85 Bulletin 85/02**

(45) Publication of the grant of the patent:
**01.03.89 Bulletin 89/09**

(84) Designated Contracting States:
**BE DE FR GB IT NL SE**

(56) References cited:
**FR-A-1 526 867**
**FR-A-2 212 612**
**GB-A-1 247 590**

(73) Proprietor: **McNally, Lillian A.**
**1444 Rhode Island Avenue**
**N.W. Washington DC 20036 (US)**

(72) Inventor: **McNally, Lillian A.**
**1444 Rhode Island Avenue**
**N.W. Washington DC 20036 (US)**

(74) Representative: **Phélip, Bruno et al**
**c/o Cabinet Harlé & Phélip 21, rue de La**
**Rochefoucauld**
**F-75009 Paris (FR)**

Courier Press, Leamington Spa, England.

## Description

This invention relates to the art of nuclear reactors, particularly the art of light-water cooled nuclear power plants.

The known fission nuclear reactor employs a fuel, such as uranium, to produce heat which is transferred to a generating apparatus, typically a turbine driven generator. A known uranium fuel is enriched uranium-235. A coolant medium is circulated through the reactor to absorb heat produced by the nuclear reaction to create steam much as in oil or gas steam-generating processes. The steam is directed to a turbine to drive a generator, and the steam is then condensed and reintroduced to the coolant stream as a liquid.

US—A—3,222,255 (Maldague) teaches a circuit for a nuclear reactor wherein a distillation column is used for removing substances which are suspended or in solution in the coolant circuit. The coolant intentionally contains a substantial amount of heavy water.

It is known to use either light water ($H_2O$) or heavy water ($D_2O$) as the coolant medium. Light water is used because of its good heat transfer and abundance. A reactor using light water as a coolant is commonly known as a light-water reactor.

A significant problem with the known nuclear reactor is that the coolant medium becomes radioactive because of bombardment of the medium with neutrons produced by the nuclear reaction. When water is used as the coolant medium, the bombardment with neutrons produces tritium which is highly radioactive and dangerous. The production of tritium is a two-step process. First, light hydrogen accepts one neutron to produce deuterium (heavy hydrogen). Second, the heavy hydrogen accepts another neutron to become the heaviest known hydrogen, which is called tritium. The second reaction is much slower than the first.

The major technique of preventing escape of tritium is to seal the coolant medium so as to prevent its escape. It is impossible, however, to fully prevent escape of the coolant medium since there must be a pressure relief valve for those instances when the coolant medium becomes overheated. It is a major safety hazard for the reactor to overheat thus causing the pressure relief valve of the coolant circuit to open and release tritium into the atmosphere.

The invention prevents a safety hazard caused by the presence of tritium in a coolant medium of a light-water reactor by removing deuterium from the coolant.

According to the invention, a portion of said circulating light-water coolant medium is diverted to removing deuterium and deuterium is continuously removed from said portion of the coolant medium, during operation of the reactor and formation of tritium is accordingly reduced or prevented. Thus, when a reactor overheats and the pressure relief valve is opened, exiting steam will not present a safety hazard because it will contain an extremely small amount of tritium.

Deutrium formed in the coolant medium combines with oxygen and either hydrogen or deuterium to form intermediate weight water or heavy water. Intermediate weight water and heavy water may be separated from light water by known apparatus. Since the difference in boiling points of the intermediate weight and light weight water is about one-half degree Celsius while that of the heavy water and the light water is about one degree Celsius, a preferred apparatus for separating these materials is a distillation column having about one hundred plates. The distillation column has one advantage that heat from the circulating coolant may be used to boil the material in the distillation column, and a second advantage that heat removed by the column's condenser can be used to preheat a coolant used in a secondary circuit.

In accordance with the invention, only a portion of the circulating coolant stream is subjected to removal of deuterium or heavy water. It has been determined that if approximately a one-percent bleed sample is taken continuously from the coolant medium, enough deuterium, or heavy and intermediate water, will be removed to diminish the level of deuterium progressively from 1 part per 6,400 parts to 1 part per 10,000 parts or as far as it is determined practical to go. This will prevent formation of an unsafe level of tritium.

It is an object of this invention to provide increased safety in a nuclear reactor.

It is a further object of this invention to prevent the formation of an unsafe level of tritium in a coolant medium for a nuclear reactor.

It is a still further object of this invention to continuously remove deuterium from the coolant medium of a nuclear reactor.

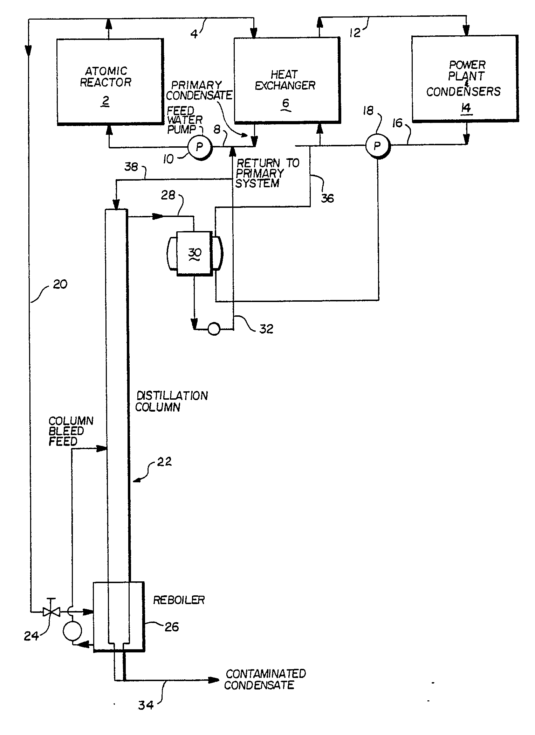

The figure shows a schematic view of a nuclear reactor system.

The figure shows a schematic view of a typical power plant using an atomic reactor as the heat source. The atomic reactor 2 uses enriched uranium as a fuel to heat a coolant medium to produce a high temperature stream 4 which is directed to a heat exchanger 6. After passing through the heat exchanger 6, a lower temperature stream 8 is directed back to the reactor 2 to complete a circuit. A pump 10 serves to drive the coolant medium in the circuit.

The heat exchanger 6 transfers heat from a primary cooling medium to a secondary stream which is used to drive electric generators. A high temperature secondary stream 12 exits the heat exchanger 6 and is directed to a power plant 14. This power plant typically contains a plurality of turbines which are driven by a high temperature steam and which are in turn connected to generators for generating electricity. A low temperature secondary stream 16 is directed from the power plant back to the heat exchanger 6. A second pump 18 is used to drive the fluid in the secondary stream.

The primary and secondary streams are used to prevent radioactive medium from being introduced into the power plant. When the primary stream is made safe in accordance with the invention, the plant may be designed so that the primary stream drives the turbines.

In accordance with the invention, a bleed stream 20 is taken from the primary coolant stream and is fed into a distillation column 22. This bleed stream is preferably one percent of the primary stream, but need not be so limited, depending upon the particular circumstances. The size of the bleed stream should be adequate to reduce the amount of deuterium in the primary stream to below the concentration of deuterium found in nature. The normal concentration of deuterium is 1/6,400, and it is preferred to reduce the concentration of deuterium in the primary stream to at least between 1/6400—1/10,000. It may be practical in some instances to reduce the deuterium concentration even further.

The bleed stream 20 is directed through a pressure relief valve 24 and into the reboiler 26 of the distillation column. Since the heavy water in the bleed stream has a higher boiling point that that of the light water in the bleed stream, the distillation column will separate the deuterium-containing water from the light water. Vaporized light water is taken out of the top of the distillation column at 28, and the light-water vapor is then directed to a condenser 30. Part of the condensed light water 32 is directed back into the low-temperature primary stream 8, and part becomes reflux water for the distillation column and is carried through line 38.

Heavy water and intermediate weight water, containing deuterium, are taken from the distillation column at 34 and disposed of or sold for known uses.

The condenser is a heat exchanger with cooling supplied by cool water 36 from the lower-temperature secondary stream 16. The cooling water 36 is returned to the stream 16 after passing through the condenser 30. This arrangement provides for a very efficient use of energy in the plant since the heat removed from the light-water steam 38 is added back to the circulating stream 16.

It will be appreciated by those of skill in the art that a very safe nuclear reactor has been provided wherein the formation of dangerous tritium will be prevented.

While a preferred embodiment has been descirbed, variations within the scope of the invention will be apparent to those of skill in the art.

## Claims

1. A method of preventing formation of tritium in a circulating light-water coolant medium for light-water cooled nuclear reactor characterized in that it comprises diverting at least a portion of said circulating light water coolant medium to means for removing deuterium to continuously remove deuterium from said portion of said circulating medium during operation of said reactor.

2. The method according to claim 1, characterized in that said portion is substantially one percent of said ciruclating medium.

3. The method according to claim 1, characterized in that said step of continuously removing deuterium comprises returning a remainder of said portion having a reduced deuterium content to said circulating medium.

4. The method according to claim 3, characterized in that said step of removing comprises physically separating said portion from said circulating medium and directing said portion to a means for removing deuterium from said portion.

5. The method to claim 4, characterized in that said means for removing deuterium is a distillation column.

6. The method according to claim 5, characterized in that the deuterium concentration of said remainder is less than about one part in 6,400.

7. The method according to claim 5, characterized in that said step of separating comprises vaporizing light from said portion and condensing said vaporized light-water water to produce said remainder.

8. A light-water nuclear reactor, wherein predominantly light water is the circulating coolant medium in a coolant circuit, characterized in that it comprises means (20) for directing at least a portion of said circulating coolant from said coolant circuit to means (22) for removing deuterium from said circulating coolant during operation of said reactor, whereby the formation of tritium is substantially prevented and means (32) for returning said portion to said circuit.

9. The reactor according to claim 8, characterized in that the means for removing deuterium is a distillation column (22) which separates heavy water in said portion from light water.

10. The reactor according to claim 9, characterized in that said portion is substantially one percent of said circulating coolant.

## Patentansprüche

1. Verfahren zur Verhinderung der Bildung von Tritium in einem zirkulierenden Leichtwasser-Kühlmedium für einen mit Leichtwasser gekühlten Kernreacktor, dadurch gekennzeichnet, daß man während des Betriebs des Reaktors wenigstens einen Teil des zirkulierenden Leichtwasser-Kühlmediums zu Einrichtungen zur Entfernung von Deuterium lenkt, um kontinuierlich Deuterium aus diesem Teil des zirkulierenden Mediums zu entfernen.

2. Verfahren nach Anspruch 1, dadurch gekennzeichnet, daß der genannte Teil im wesentlichen 1% des zirkulierenden Mediums ist.

3. Verfahren nach Anspruch 1, dadurch gekennzeichnet, daß die Stufe der kontinuierlichen Deuteriumentfernung ein Rückführen eines Restes dieses Anteils mit vermindertem Deuteriumgehalt zu dem zirkulierenden Medium umfaßt.

4. Verfahren nach Anspruch 3, dadurch gekennzeichnet, daß die Stufe einer Entfernung eine physikalische Trennung besagten Teils von dem zirkulierenden Medium und eine Überführung dieses Teils zu einer Einrichtung zur Entfernung von Deuterium aus diesem Teil umfaßt.

5. Verfahren nach Anspruch 4, dadurch gekennzeichnet, daß die Einrichtungen zur Entfernung von Deuterium eine Destillationskolonne sind.

6. Verfahren nach Anspruch 5, dadurch gekennzeichnet, daß die Deuteriumkonzentration des Restes geringer als etwa ein Teil in 6400 Teilen ist.

7. Verfahren nach Anspruch 5, dadurch gekennzeichnet, daß die Stufe des Trennens ein Verdampfen von Leichtwasser aus dem besagten Teil und ein Kondensieren des verdampften Leichtwassers unter Erzeugung des genannten Restes umfaßt.

8. Leichtwasser-Kernreaktor, in welchem vorherrschend Leichtwasser das zirkulierende Kühlmedium in einem Kühlmittelkreis ist, dadurch gekennzeichnet, daß er Einrichtungen (20) zur Überführung wenigstens eines Teils des zirkulierenden Kühlmittels aus dem Kühlmittelkreis zu Einrichtungen (22) zur Entfernung von Deuterium aus dem zirkulierenden Kühlmittel während des Betriebs des Reaktors, wobei die Bildung von Tritium im wesentlichen verhindert wird, und Einrichtungen (30) zur Rückführung des besagten Teils zu dem Kreis umfaßt.

9. Reaktor nach Anspruch 8, dadurch gekennzeichnet, daß die Einrichtungen zur Entfernung von Deuterium eine Destillationskolonne (22) sind, die schweres Wasser in dem besagten Teil von leichtem Wasser trennt.

10. Reaktor nach Anspruch 9, dadurch gekennzeichnet, daß der besagte Teil im wesentlichen 1% des zirkulierenden Kühlmittels ist.

**Revendications**

1. Procédé pour empêcher la formation de tritium dans un milieu de refroidissement formé d'eau légère en circulation pour un réacteur nucléaire refroidi par eau légère, caractérisé en ce qu'il consiste à prélever au moins une partie dudit milieu de refroidissement formé d'eau légère en circulation pour l'envoyer à des moyens d'élimination du deutérium, servant à éliminer en continu le deutérium de ladite partie dudit milieu en circulation, pendant le fonctionnement dudit réacteur.

2. Procédé selon la revendication 1, caractérisé en ce que ladite partie est égale sensiblement à un pour cent dudit milieu en circulation.

3. Procédé selon la revendication 1, caractérisé en ce que ladite étape élimination continue du deutérium consiste à renvoyer un reste de ladite partie possédant une teneur réduite en deutérium audit milieu en circulation.

4. Procédé selon la revendication 3, caractérisé en ce que ladite étape d'élimination inclut la séparation physique de ladite partie par rapport audit milieu en circulation et l'envoi de cette partie à des moyens d'élimination du deutérium de cette partie.

5. Procédé selon la revendication 4, caractérisé en ce que lesdits moyens d'élimination du deutérium sont constitués par une colonne de distillation.

6. Procédé selon la revendication 5, caractérisé en ce que la teneur en deutérium dudit reste est inférieure à environ une partie sur 6 400.

7. Procédé selon la revendication 5, caractérisé en ce que ladite étape de séparation inclut la vaporisation de l'eau légère à partir de ladite partie et la condensation de ladite eau légère vaporisée de manière à produire ledit reste.

8. Réacteur nucléaire à eau légère, dans lequel l'eau légère est de façon prédominante le milieu de refroidissement en circulation dans un circuit de refroidissement, caractérisé en ce qu'il comporte des moyens (20) pour diriger au moins une partie dudit milieu de refroidissement en circulation depuis ledit circuit de refroidissement en direction des moyens (22) servant à éliminer le deutérium dudit milieu de refroidissement en circulation pendant le fonctionnement dudit réacteur, ce qui permet d'empêcher pour l'essentiel la formation de tritium, et des moyens (30) pour envoyer ladite partie audit circuit.

9. Réacteur selon la revendication 8, caractérisé en ce que les moyens servant à éliminer le deutérium sont constitués par une colonne de distillation (22) qui sépare l'eau lourde de l'eau légère dans ladite partie.

10. Réacteur selon la revendication 9, caractérisé en ce que ladite partie est égale sensiblement à un pour cent dudit milieu de refroidissement en circulation.

ATOMIC
REACTOR
2

PRIMARY
CONDENSATE

HEAT
EXCHANGER
6

POWER
PLANT
CONDENSERS
14

FEED
WATER
PUMP

4

12

P

8

P

18

16

10

RETURN TO
PRIMARY
SYSTEM

38

36

28

30

20

32

DISTILLATION
COLUMN

COLUMN
BLEED
FEED

22

REBOILER

24

26

34

CONTAMINATED
CONDENSATE

1